# FASCICULE DE BREVET EUROPEEN

(11) **EP 2 736 792 B1**
(45) Date de publication et mention de la délivrance du brevet: **12.08.2015**
(21) Numéro de dépôt: 12737832.1
(22) Date de dépôt: 24.07.2012
(51) Int. Cl.: B62D 21/15, B62D 25/08

(54) **MODULE DE FACE AVANT DE VEHICULE, NOTAMMENT VEHICULE AUTOMOBILE**
FRONTENDMODUL FÜR EIN FAHRZEUG, INSBESONDERE EIN KRAFTFAHRZEUG
FRONT-END MODULE FOR A VEHICLE, PARTICULARLY A MOTOR VEHICLE

(30) Priorité: 26.07.2011 FR 1156829
(43) Date de publication de la demande: 04.06.2014
(73) Titulaire: Valeo Systèmes Thermiques, 78321 Le Mesnil Saint Denis (FR)
(72) Inventeur: LANARD, Jean-Louis, F-78810 Feucherolles (FR); GUYOMARD, Jean-Nicolas, F-27930 Le Mesnil Fuguet (FR); CAMARGO, Leonardo, 49600-590 Stellas Maris Salvador (FR)
(74) Mandataire: Metz, Gaëlle
(86) Numéro de dépôt international: PCT/EP2012/064488
(87) Numéro de publication internationale: WO 2013/014148

(56) Documents cités:
- EP-A1- 2 080 690
- DE-A1- 10 260 171
- DE-A1-102005 058 180
- US-A1- 2011 140 464

## Description

La présente invention concerne un module de face avant de véhicule, notamment véhicule automobile, ainsi qu'une bride et une armature de support d'une tel module. Elle concerne aussi un ensemble d'un tel module et d'un dispositif d'absorption de chocs.

Un module de face avant est un élément structurel susceptible d'intégrer divers équipements du véhicule, tels que projecteurs, clignotants, avertisseur sonore, échangeur thermique ou module de refroidissement complet, etc. Il est destiné à être monté, pré équipé desdits éléments, sur le châssis du véhicule. Un tel mode de montage permet d'optimiser le processus de fabrication du véhicule en opérant en parallèle le montage d'éléments directement sur le châssis et le montage du module de face avant, ce dernier étant ensuite rapporté sur le châssis.

Il est ainsi connu des modules de faces avant comprenant une armature de support permettant la fixation des éléments d'équipement de la face avant, le module étant fixée au châssis par ladite armature.

Cela étant, différentes difficultés sont à résoudre. La face avant doit tout d'abord permettre une absorption de chocs. Il a déjà été prévu en ce sens un montage de l'armature (DE102005058180) de support sur le châssis du véhicule permettant à l'armature de support d'être entraînée vers l'arrière en cas de choc frontal.

La face avant doit également participer à l'aspect d'ensemble du véhicule en assurant une interface esthétique entre la carrosserie du véhicule et les éléments d'équipement, visibles extérieurement, que ladite face avant intègre. Dans le cas de faces avant munies de projecteurs, il est ainsi nécessaire que le positionnement de la face avant permette de disposer d'une fente entre le contour des projecteurs et les éléments de carrosserie voisins la plus fine et la plus régulière possible.

Une telle contrainte est d'autant plus difficile à gérer que la précision de fabrication du châssis est faible. Pour résoudre ce problème, différentes solutions permettant un ajustement du positionnement de l'armature de support lors de sa fixation sur le châssis sont envisageables. Elles impliquent cependant de conférer à la liaison entre l'armature de support et le châssis une rigidité incompatible avec les objectifs d'absorption de chocs évoqués plus haut.

L'invention vise à améliorer la situation et propose à cet effet un module de face avant de véhicule, notamment véhicule automobile, comprenant une armature de support et au moins une bride d'accrochage de l'armature de support à un châssis du véhicule, ladite bride étant configurée pour autoriser un positionnement libre du module par rapport au châssis dans un plan orthogonal à une direction X de déplacement du véhicule ainsi qu'une fixation dudit module sur ledit châssis selon ledit positionnement, ladite bride et ladite armature de support étant mutuellement configurées pour être fixées l'une à l'autre tout en autorisant un déplacement de l'une par rapport à l'autre en cas de chocs.

Conformément à l'invention comme définie dans la revendication 1, dans ce module l'armature de support est munie d'un logement pour accueillir ladite bride, ledit logement étant configuré pour autoriser, d'une part, une fixation entre la bride et l'armature de support selon un effort de direction donnée, présentant une composante dans une direction Y horizontale et orthogonale à la direction X de déplacement du véhicule et, d'autre part, un guidage de l'armature de support par rapport au châssis selon ladite direction X de déplacement du véhicule en cas de chocs.

Grâce à ladite bride, on dispose d'une pièce intermédiaire qui permet de fixer la face avant par rapport au châssis du véhicule à l'emplacement voulu tout en gardant une liaison avec au moins un degré de liberté entre l'armature de support de la face avant et ledit châssis. On peut ainsi bénéficier d'une face avant s'intégrant de façon esthétique dans le véhicule tout en autorisant une absorption de chocs.

Le degré de liberté conservé entre la bride et l'armature de support pourra en particulier permettre un mouvement selon la direction X de déplacement du véhicule ou à tout le moins un mouvement comprenant une composante selon ladite direction X.

Par « positionnement libre du module dans le plan », on entend un positionnement libre selon au moins une direction, par exemple selon la direction Y horizontale et orthogonale à la direction X de déplacement du véhicule.

Selon différents modes de réalisation de l'invention, qui pourront être pris ensemble ou séparément :
- le logement comprend une paroi de guidage supérieure et/ou une paroi de guidage inférieure,
- la paroi de guidage inférieure est destinée à coopérer avec une paroi inférieure de la bride pour faire butée en cas d'effort exercée sur l'armature de support vers le haut,
- la paroi de guidage supérieure est destinée à coopérer avec une paroi supérieure de la bride pour faire support de ladite armature de support,
- ledit logement comprend une paroi latérale, munie d'une fente de passage d'une tige de fixation de l'armature de support, ladite tige étant orientée selon la direction donnée à l'effort de fixation.
- ladite fente présente une forme allant en s'évasant dans la direction X de déplacement du véhicule,
- le logement présente une paroi de fond munie d'une lumière, destinée à être orientée selon l'axe X de déplacement du véhicule et coopérant avec un pion de guidage de la bride d'accrochage,
- ladite bride comprend un logement pour le passage de ladite tige de fixation de l'armature de support,
- ladite bride comprend un logement pour le passage d'une tige de fixation au châssis du véhicule,
- ladite bride comprend un logement de fixation de projecteurs ou blocs optiques du véhicule.

L'invention concerne également une bride et une armature de support pour module de face avant, telles que décrites plus haut.

L'invention concerne aussi un ensemble d'un module de face avant tel que décrit plus haut et d'un dispositif d'absorption de chocs.

Le dispositif d'absorption de chocs comprend, par exemple, des platines de fixation d'une poutre pare-chocs et la ou lesdites brides d'accrochage sont fixées sur lesdites platines.

L'invention sera mieux comprise à la lecture de la description suivante accompagnée des dessins en annexe parmi lesquels :
- la figure 1 illustre en perspective un exemple de dispositif d'absorption de chocs ainsi qu'une armature de support et une bride d'accrochage d'un exemple de module de face avant selon l'invention,
- la figure 2 illustre en perspective, de façon partielle, l'armature de support de la figure 1,
- la figure 3 illustre en perspective la bride d'accrochage de la figure 1,
- les figures 4a à 4c montrent, selon un plan de coupe transversale, une représentation schématique des déplacements entre la bride d'accrochage et l'armature de support des figures 2 et 3, en cas de chocs
- la figure 5 illustre en perspective, de façon partielle, une variante d'armature de support et de bride d'accrochage, conformes à l'invention, selon un premier angle de vue,
- la figure 6 illustre une partie repérée II de la figure 5, selon un autre angle de vue,
- la figure 7 est une vue de la partie II de la figure 5, selon un troisième angle de vue.

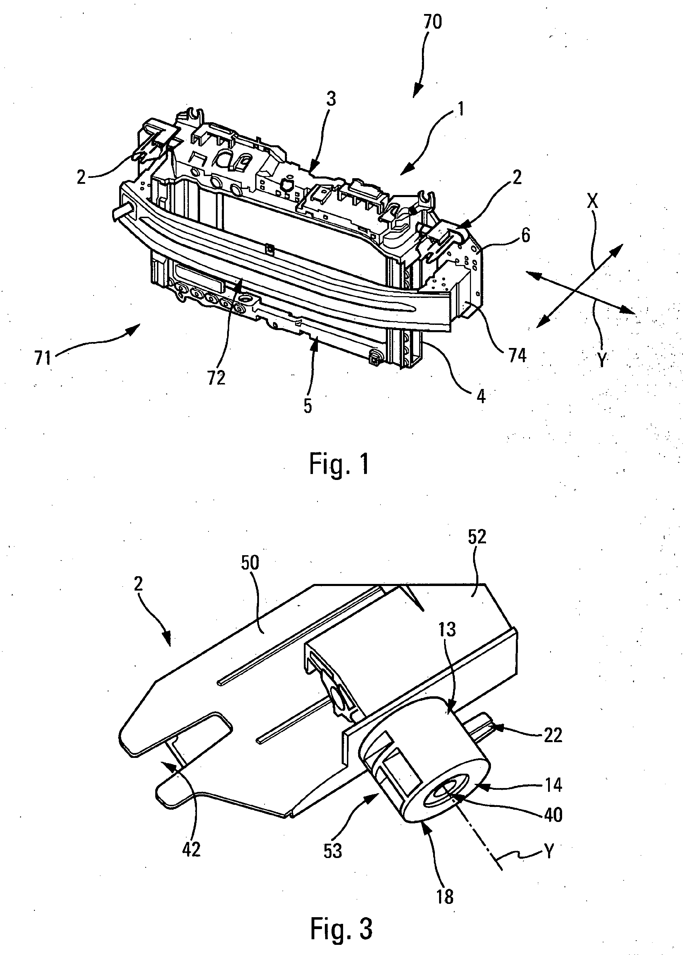

Comme illustré à la figure 1, l'invention concerne un module de face avant de véhicule, notamment véhicule automobile. Il comprend une armature de support 1 et au moins une bride 2 d'accrochage de l'armature de support 1 à un châssis du véhicule.

Le module de face avant supporte, par exemple, différents éléments d'équipement, non représentés, tels qu'une serrure de capot, des échangeurs de chaleurs, des projecteurs ou blocs optiques, des réservoirs de différents fluides et/ou autres. Tout ou partie desdits équipements sont fixés, notamment, à l'armature de support 1.

Ladite armature de support 1 comprend, notamment, une traverse supérieure 3, des jambages latéraux 4 et/ou une traverse inférieure 5. Par « traverse », on entend des éléments s'étendant sensiblement horizontalement dans une direction Y, destinée à être horizontale et orthogonale à une direction X de déplacement du véhicule.

La face avant pourra comprendre une bride 2 de part et d'autre de ladite armature de support 1, au niveau de chaque extrémité longitudinale de la traverse supérieure 3. Il s'agit, notamment, de brides 2 identiques ou à tout le moins symétriques l'une par rapport à l'autre.

Selon l'invention, ladite bride 2 est configurée pour autoriser un positionnement libre du module par rapport à un châssis du véhicule dans un plan orthogonal à la direction X de déplacement du véhicule ainsi qu'une fixation dudit module sur ledit châssis selon ledit positionnement.

Toujours à la figure 1, on voit que les brides 2 permettent un réglage de leur placement par rapport au châssis, en particulier par rapport à des platines de fixation 6, et autorise ainsi un bon positionnement de la face avant en fonction de la configuration du véhicule. On peut de la sorte absorber les dispersions de fabrication, notamment les écarts de distance entre les platines de fixation 6 et/ou les variations de positionnement des éléments de carrosserie avec lesquels la face avant est destinée à créer une interface visible de l'extérieur du véhicule.

En outre, ladite bride 2 et ladite armature de support 1 sont mutuellement configurées pour être fixées l'une à l'autre tout en autorisant un déplacement de l'une par rapport à l'autre selon ladite direction X en cas de chocs. Ainsi bien que la face avant puisse être librement positionnée par rapport au châssis, son armature de support garde au moins un degré de liberté lui permettant, ainsi qu'aux éléments d'équipement qu'elle supporte, d'éviter d'être trop sévèrement déteriorée suite à une collision.

Comme plus particulièrement illustré aux figures 2 et 5 à 7, l'armature de support 1 pourra être munie d'un logement 10 pour accueillir ladite bride 2. Ledit logement 10 est configuré pour autoriser, d'une part, une fixation entre la bride 2 et l'armature de support 1, selon un effort de direction donnée, présentant une composante dans la direction Y, et, d'autre part, un guidage de l'armature de support 1 par rapport au châssis selon la direction X de déplacement du véhicule en cas de choc. L'effort de fixation est ici orienté selon la direction Y.

Le logement 10 comprend, par exemple, une paroi de guidage supérieure 11 et/ou une paroi de guidage inférieure 12.

La paroi de guidage supérieure 11 est destinée à coopérer avec une paroi supérieure 13 de la bride 2 pour faire support de ladite armature de support 1. L'armature de support 1, par l'intermédiaire de sa face de guidage supérieure 11, repose ainsi au moins en partie sur la bride 2, non seulement en position normale mais également lors de leur déplacement en cas de chocs.

La paroi de guidage inférieure 12 est destinée à coopérer avec une paroi inférieure 14 de la bride 2 pour faire butée en cas d'effort exercée sur l'armature de support 1 vers le haut. En particulier, pour des faces avant intégrant la serrure de capot, elle permettra à la face avant de résister aux efforts verticaux exercés par le capot sur la face avant par l'intermédiaire de la serrure, sous l'effet des vibrations auquel le véhicule est soumis lors du roulage.

Ledit logement pourra par ailleurs comprendre une paroi latérale 15, munie d'une fente de passage 16 d'une tige de fixation 17 (non représenté à la figure 2) de l'armature de support 1. Ladite fente 16 présente, par exemple, une forme allant en s'évasant dans la direction X de déplacement du véhicule. Son contour est ici ouvert à l'une de ses extrémités 19. Ladite tige de fixation 17 est orientée selon la direction donnée à l'effort de fixation, ici la direction Y. On comprend que, en mode normal, la tige de fixation 17 maintient l'armature de support 1 sur la bride d'accrochage 2 et que, en cas de chocs, la tige de fixation 17 peut se déplacer dans la fente 16 (selon l'axe X). Ladite paroi latérale 15 fait guidage plan contre plan, selon la direction X, avec une face latérale 18 de la bride 2.

Selon le mode de réalisation des figures 2 à 4, le logement 10 présente une paroi de fond 20, munie d'une lumière 21, destinée à être orientée selon l'axe X et coopérant avec un pion 22 de guidage de la bride d'accrochage 2. Le logement 10 est ici en forme de cuvette de section sensiblement semi cylindrique s'ouvrant vers l'avant (selon la direction X) et vers le côté, au niveau d'une face opposée à sa paroi latérale 15, pour accueillir la bride 2. La lumière 21 est située dans le fond 20 de la cuvette.

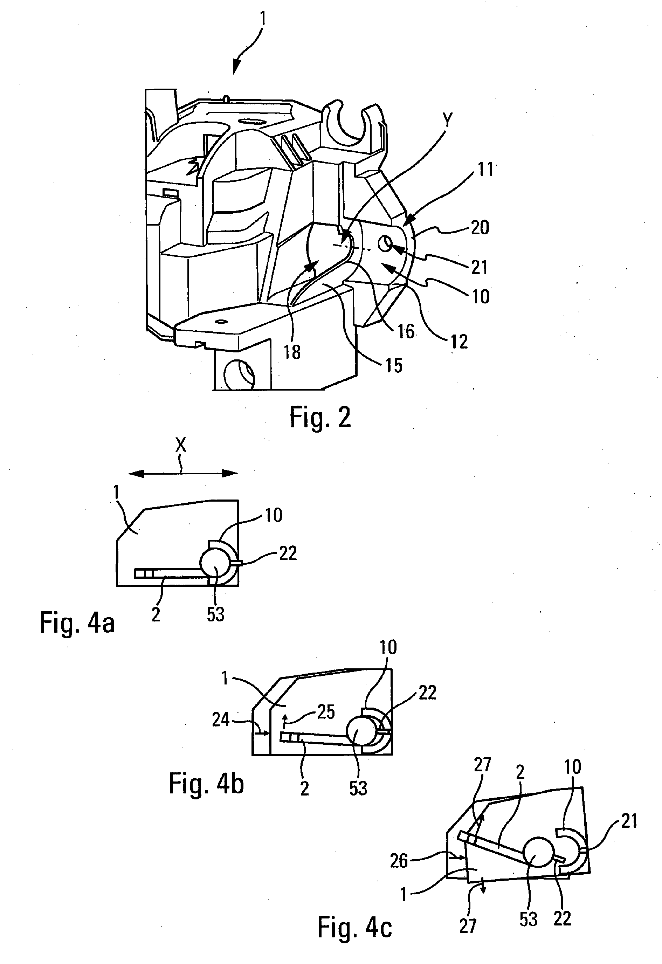

Les figures 4a à 4c illustrent les mouvements relatifs de l'armature de support 1 et de la bride d'accrochage 2 en cas de chocs. A la figure 4a, en position normal, la bride 2 est dans le logement 10 et le pion 22 est dans la lumière 21.

A la figure 4b, un choc est intervenue et l'armature de support 1 se déplace vers l'arrière par rapport à la bride 2 selon la flèche repérée 24. Le pion 22 est alors partiellement sorti de la lumière 21. La bride 2 pourra également être entrainée en rotation vers le haut, selon la flèche repérée 25, autour de la tige de fixation (non représentée), jouant alors en outre le rôle de pivot. On a ainsi un guidage à la fois en translation vers l'arrière selon l'axe X et en rotation autour d'un axe orienté selon la direction Y. La forme semi-cylindrique du logement 10 autorise ce double mouvement et une élasticité sera donnée au pion 22 pour tolérer les déformations engendrées.

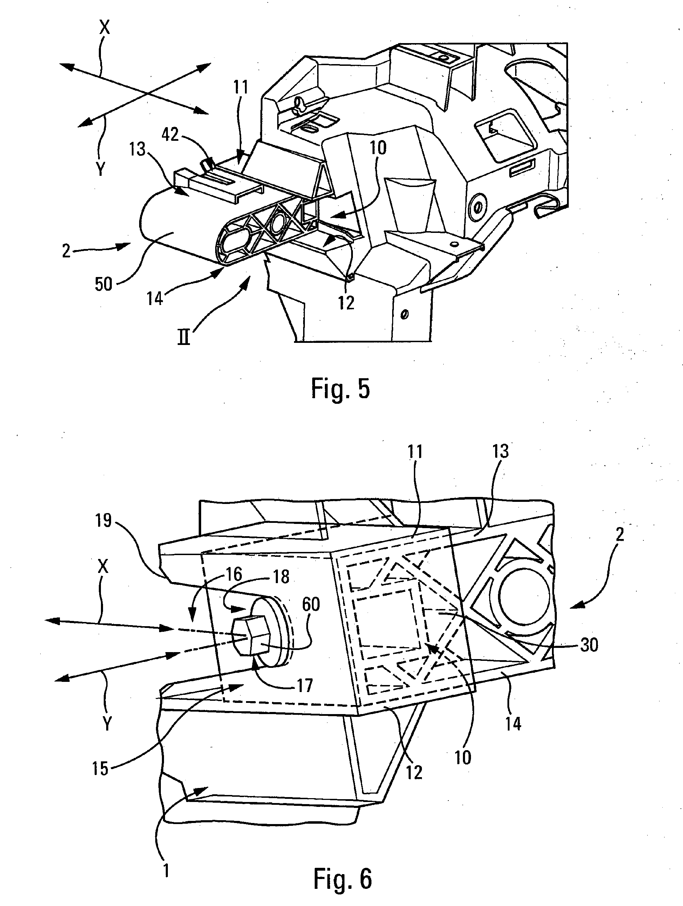

A la figure 4c, la déformation de la face avant se poursuit sous l'action du choc. L'armature de support 1 et ladite bride 2 se déplacent l'un par rapport à l'autre sous l'action du même double mouvement de translation, selon l'axe X, comme illustré par la flèche repérée 26, et de rotation autour de la tige de fixation orientée selon la direction Y, comme illustré par les flèches repérées 27. Grâce aux degrés de libertés ainsi donnés à l'armature de support 1 par rapport au châssis par l'intermédiaire de la bride 2, on voit que l'on diminue effectivement les risques de rupture de l'armature 1 lors d'un choc. Selon le mode de réalisation des figures 5 à 7, le logement 10 est de forme parallélépipédique. Il comprend une paroi de fond 30 qui pourra faire butée pour la bride 2. Il s'ouvre vers l'avant (selon la direction X) et vers le côté, au niveau d'une face opposée à sa paroi latérale 15, pour accueillir la bride 2. Il guide l'armature de support 1 en translation, selon la direction X, par rapport à la bride 1, tout au long du choc.

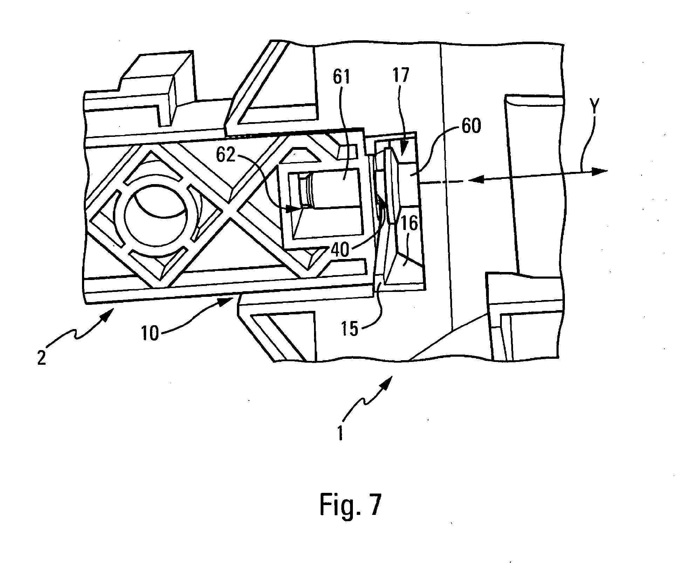

A la figure 5, le module est vu de l'avant, par le dessus et par le côté. A la figure 6, il s'agir d'un angle de vue à peu près opposé. A la figure 7, il s'agit à nouveau d'un angle de vue par l'avant, selon une direction très légèrement décalée vers le haut et vers le côté par rapport à la direction X.

Comme plus particulièrement illustré aux figures 3 et 5 à 7, ladite bride 2 comprend, par exemple, un logement pour le passage de ladite tige de fixation 17 de l'armature de support. Elle pourra également comprendre un logement 41 pour le passage d'une tige de fixation, non illustrée, au châssis du véhicule. Lesdits logements de la bride sont, par exemple de section ronde et/ou oblongue.

Ladite bride 1 pourra encore comprendre un logement 42 de fixation de projecteurs ou blocs optiques du véhicule. Ainsi, en variante, les projecteurs ou blocs optiques ne sont pas rapportés sur l'armature de support 1 mais sur la bride d'accrochage 2.

Selon le mode de réalisation des figures 2 à 4, ladite bride 2 présente, par exemple, une partie plane 50, présentant le logement 42 de fixation du projecteur. Ladite partie plane est surmontée localement d'un premier bloc 52, ici de structure alvéolaire et/ou compartimentée. Ledit premier bloc 52 comprend le logement pour la fixation au châssis. Un second bloc 53, ici lui aussi de structure alvéolaire et/ou compartimentée, est latéralement rapporté sur ledit premier bloc 52. Ledit second bloc 53 comprend le logement 40 pour la tige de fixation de l'armature de support. Des faces supérieure, inférieure et latérale dudit second bloc 43 définissent respectivement les parois supérieure 13, inférieure 14 et latérale 18 mentionnées plus haut, de même que ledit pion 22

Selon le mode de réalisation des figures 5 à 7, la bride est constituée d'un corps de forme sensiblement parallélépipédique. Ledit corps est, notamment, de structure alvéolaire et/ou compartimentée. Des faces supérieure, inférieure et latérale dudit corps définissent respectivement les parois supérieure 13, inférieure 14 et latérale 18 mentionnées plus haut. La face latérale 50 opposée à celle définissant la paroi latérale 18 pourra être de forme arrondie.

Cela étant, la tige de fixation 17 est constituée, par exemple, par un écrou muni d'une tête 60. Elle coopère avec la bride 2, notamment, par l'intermédiaire d'un manchon de vissage 61, bloqué dans un compartiment 62 (visible à la figure 7 pour le mode de réalisation concerné) de ladite bride 2, le logement 40 pour le passage de ladite tige de fixation 17 débouchant dans ledit compartiment 62. En variante, elle pourra être vissée dans ledit logement 40, prévu taraudé.

Après vissage, la tête 60 de l'écrou est en appui contre une face de la paroi latérale 15 du logement 10 de l'armature de support 1 et la face de la paroi latérale 18 de la bride 2 est en appui contre une face opposée de ladite paroi latérale 15 du logement 10 de l'armature de support 1.

L'invention concerne également une bride pour module de face avant, telle que décrite plus haut. Ladite bride 1 est, notamment, en matériau plastique. Il pourra cependant s'agir de tout autre type de matériaux.

L'invention concerne aussi une armature de support pour module de face avant, telle que décrite plus haut. Elle pourra être monobloc ou assemblé à partir de plusieurs éléments. Le ou lesdits éléments sont, notamment, en métal, en plastique ou en matériau hybride métal-plastique.

Si l'on se reporte à nouveau à la figure 1, l'invention concerne encore un ensemble d'un module 70 de face avant tel que décrit plus haut et d'un dispositif 71 d'absorption de chocs.

Ledit ensemble pourra être configuré pour un être monté d'un bloc sur les longerons du châssis du véhicule.

Le dispositif 71 d'absorption de chocs comprend, par exemple, une poutre pare-chocs 72 rapportée sur les platines de fixation 6. Ladite poutre pare-choc 72 s'étend transversalement entre lesdites platines de fixations 6 auxquelles elle pourra être fixée par l'intermédiaire d'absorbeur de chocs 74.

Les brides d'accrochage 2 du module de face avant sont montées sur lesdites platines de fixation 6, notamment, dans leur partie supérieure.

## Revendications

1. Module de face avant de véhicule, notamment véhicule automobile, comprenant une armature de support (1) et au moins une bride d'accrochage (2) de l'armature de support (1) à un châssis du véhicule, ladite bride (2) étant configurée pour autoriser un positionnement libre du module par rapport au châssis dans un plan orthogonal à une direction X de déplacement du véhicule ainsi qu'une fixation dudit module sur ledit châssis selon ledit positionnement, ladite bride (2) et ladite armature de support (1) étant mutuellement configurées pour être fixées l'une à l'autre tout en autorisant un déplacement de l'une par rapport à l'autre selon ladite direction X en cas de chocs **caractérisé en ce que** l'armature de support (1) est munie d'un logement (10) pour accueillir ladite bride (2), ledit logement (10) étant configuré pour autoriser, d'une part, une fixation entre la bride (2) et l'armature de support (1) selon un effort de direction donnée, présentant une composante dans une direction Y horizontale et orthogonale à la direction X de déplacement du véhicule et, d'autre part, un guidage de l'armature de support (1) par rapport au châssis selon la direction de déplacement du véhicule, en cas de chocs.

2. Module selon la revendication 1 dans laquelle le logement (10) comprend une paroi de guidage supérieure (11) et/ou une paroi de guidage inférieure (12).

3. Module selon la revendication 2 dans laquelle la paroi de guidage inférieure (12) est destinée à coopérer avec une paroi inférieure (14) de la bride (2) pour faire butée en cas d'effort exercée sur l'armature de support vers le haut.

4. Module selon la revendication 2 dans laquelle la paroi de guidage supérieure (11) est destinée à coopérer avec une paroi supérieure (13) de la bride (2) pour faire support de ladite armature de support (1).

5. Module selon l'une quelconque des revendications précédentes dans laquelle ledit logement (10) comprend une paroi latérale (15), munie d'une fente de passage (16) d'une tige de fixation (17) de l'armature de support (1), ladite tige (17) étant orientée selon la direction donnée à l'effort de fixation.

6. Module selon la revendication 5 dans laquelle ladite fente (16) présente une forme allant en s'évasant dans la direction X de déplacement du véhicule.

7. Module selon l'une quelconque des revendications précédentes dans laquelle le logement (10) présente une paroi de fond (20) munie d'une lumière (21), destinée à être orientée selon l'axe X de déplacement du véhicule et coopérant avec un pion de guidage (22) de la bride d'accrochage (2).

8. Module selon l'une quelconque des revendications 5 à 7 dans laquelle ladite bride (2) comprend un logement (40) pour le passage de ladite tige de fixation de l'armature de support (1).

9. Module selon l'une quelconque des revendications précédentes dans laquelle ladite bride (2) comprend un logement pour le passage d'une tige de fixation au châssis du véhicule.

10. Module selon l'une quelconque des revendications précédentes dans laquelle ladite bride comprend un logement (42) de fixation de projecteurs ou blocs optiques du véhicule.

11. Bride (2) de module de face avant selon l'une quelconque des revendications précédentes.

12. Armature (1) de support de module de face avant selon l'une quelconque des revendications précédentes.

13. Ensemble d'un module de face avant (70) selon l'une quelconque des revendications 1 à 10 et d'un dispositif d'absorption de chocs (71).

14. Ensemble selon la revendication 13 dans lequel le dispositif d'absorption de chocs (71) comprend des platines de fixation (6) d'une poutre pare-chocs (72) et dans lequel la ou lesdites brides d'accrochage (2) sont fixées sur lesdites platines (6).

## Patentansprüche

1. Frontend-Modul eines Fahrzeugs, insbesondere eines Kraftfahrzeugs, das ein Traggerüst (1) und mindestens einen Flansch (2) zur Befestigung des Traggerüsts (1) an einem Fahrwerk des Fahrzeugs enthält, wobei der Flansch (2) konfiguriert ist, eine freie Positionierung des Moduls bezüglich des Fahrwerks in einer Ebene orthogonal zu einer Fahrtrichtung X des Fahrzeugs sowie eine Befestigung des Moduls am Fahrwerk gemäß der Positionierung zu erlauben, wobei der Flansch (2) und das Traggerüst (1) gegenseitig konfiguriert sind, aneinander befestigt zu werden und gleichzeitig eine Verschiebung zueinander gemäß der Richtung X im Fall eines Aufpralls zu erlauben, **dadurch gekennzeichnet, dass** das Traggerüst (1) mit einer Aufnahme (10) versehen ist, um den Flansch (2) aufzunehmen, wobei die Aufnahme (10) konfiguriert ist, einerseits eine Befestigung zwischen dem Flansch (2) und dem Traggerüst (1) gemäß einer Krafteinwirkung gegebener Richtung, die eine Komponente in einer waagrechten Richtung Y und orthogonal zur Fahrtrichtung X des Fahrzeugs aufweist, und andererseits eine Führung des Traggerüsts (1) bezüglich des Fahrwerks gemäß der Fahrtrichtung des Fahrzeugs im Fall eines Aufpralls zu erlauben.

2. Modul nach Anspruch 1, wobei die Aufnahme (10) eine obere Führungswand (11) und/oder eine untere Führungswand (12) enthält.

3. Modul nach Anspruch 2, wobei die untere Führungswand (12) dazu bestimmt ist, mit einer unteren Wand (14) des Flanschs (2) zusammenzuwirken, um im Fall einer auf das Traggerüst nach oben ausgeübten Kraft als Anschlag zu wirken.

4. Modul nach Anspruch 2, wobei die obere Führungswand (11) dazu bestimmt ist, mit einer oberen Wand (13) des Flanschs (2) zusammenzuwirken, um als Träger für das Traggerüst (1) zu dienen.

5. Modul nach einem der vorhergehenden Ansprüche, wobei die Aufnahme (10) eine Seitenwand (15) enthält, die mit einem Durchgangsschlitz (16) einer Befestigungsstange (17) des Traggerüsts (1) versehen ist, wobei die Stange (17) in der der Befestigungskraft gegebenen Richtung ausgerichtet ist.

6. Modul nach Anspruch 5, wobei der Schlitz (16) eine Form aufweist, die sich in der Fahrtrichtung X des Fahrzeugs ausweitet.

7. Modul nach einem der vorhergehenden Ansprüche, wobei die Aufnahme (10) eine Bodenwand (20) aufweist, die mit einem Loch (21) versehen ist, das dazu bestimmt ist, gemäß der Fahrachse X des Fahrzeugs ausgerichtet zu sein und mit einem Führungszapfen (22) des Befestigungsflanschs (2) zusammenwirkt.

8. Modul nach einem der Ansprüche 5 bis 7, wobei der Flansch (2) eine Aufnahme (40) für den Durchgang der Befestigungsstange des Traggerüsts (l) enthält.

9. Modul nach einem der vorhergehenden Ansprüche, wobei der Flansch (2) eine Aufnahme für den Durchgang einer Befestigungsstange am Fahrwerk des Fahrzeugs enthält.

10. Modul nach einem der vorhergehenden Ansprüche, wobei der Flansch eine Aufnahme (42) zur Befestigung von Scheinwerfern oder Optikblöcken des Fahrzeugs enthält.

11. Flansch (2) eines Frontend-Moduls nach einem der vorhergehenden Ansprüche.

12. Traggerüst (1) eines Frontend-Moduls nach einem der vorhergehenden Ansprüche.

13. Einheit aus einem Frontend-Modul (70) nach einem der Ansprüche 1 bis 10 und einer stoßabsorbierenden Vorrichtung (71).

14. Einheit nach Anspruch 13, wobei die stoßabsorbierende Vorrichtung (71) Befestigungsplatten (6) eines Stoßfängerbalkens (72) enthält, und wobei der oder die Befestigungsflansche (2) an den Platten (6) befestigt sind.

## Claims

1. Front-end module of a vehicle, notably a motor vehicle, comprising a support frame (1) and at least one flange (2) for coupling the support frame (1) to a chassis of the vehicle, said flange (2) being configured to allow for a free positioning of the module relative to the chassis in a plane orthogonal to a direction X of movement of the vehicle as well as a fastening of said module to said chassis according to said positioning, said flange (2) and said support frame (1) being mutually configured to be fastened to one another while allowing a movement of one relative to the other in said direction X in the event of impact, **characterized in that** the support frame (1) is provided with a recess (10) to accommodate said flange (2), said recess (10) being configured to allow, on the one hand, a fastening between the flange (2) and the support frame (1) according to a force of given direction, having a component in a direction Y horizontal and orthogonal to the direction X of movement of the vehicle and, on the other hand, a guiding of the support frame (1) relative to the chassis in the direction of movement of the vehicle, in the event of impact.

2. Module according to Claim 1, in which the recess (10) comprises a top guiding wall (11) and/or a bottom guiding wall (12).

3. Module according to Claim 2, in which the bottom guiding wall (12) is intended to cooperate with a bottom wall (14) of the flange (2) as abutment in the event of force exerted upward on the support frame.

4. Module according to Claim 2, in which the top guiding wall (11) is intended to cooperate with a top wall (13) of the flange (2) to support said support frame (1).

5. Module according to any one of the preceding claims, in which said recess (10) comprises a side wall (15), provided with a slot (16) for the passage of a fastening rod (17) of the support frame (1), said rod (17) being oriented in the direction given to the fastening force.

6. Module according to Claim 5, in which said slot (16) has a form that flares outward in the direction X of movement of the vehicle.

7. Module according to any one of the preceding claims, in which the recess (10) has a bottom wall (20) provided with an opening (21), intended to be oriented along the axis X of movement of the vehicle and cooperating with a guiding pin (22) of the coupling flange (2).

8. Module according to any one of Claims 5 to 7, in which said flange (2) comprises a recess (40) for the passage of said fastening rod of the support frame (1).

9. Module according to any one of the preceding claims, in which said flange (2) comprises a recess for the passage of a rod for fastening to the chassis of the vehicle.

10. Module according to any one of the preceding claims, in which said flange comprises a recess (42) for fastening headlights or optical blocks of the vehicle.

11. Front-end module flange (2) according to any one of the preceding claims.

12. Front-end module support frame (1) according to any one of the preceding claims.

13. Assembly of a front-end module (70) according to any one of Claims 1 to 10 and an impact absorption device (71).

14. Assembly according to Claim 13, in which the impact absorption device (71) comprises plates (6) for fastening a bumper beam (72) and in which the coupling flange or flanges (2) are fastened to said plates (6).
